# EUROPEAN PATENT APPLICATION

(11) **EP 4 286 741 A1**
(43) Date of publication of application: **06.12.2023**
(21) Application number: 21922700.6
(22) Date of filing: 22.12.2021
(51) Int. Cl.: F17D 1/04, F17D 5/00, F17C 1/00, F17C 1/04

(54) **HYDROGEN TRANSPORT SYSTEM**

(30) Priority: 29.01.2021 ES 202100044 U; 12.07.2021 ES 202100302 U; 30.09.2021 ES 202100368 U
(71) Applicant: Muñoz Saiz, Manuel, 04004 Almeria (ES)
(72) Inventor: Muñoz Saiz, Manuel, 04004 Almeria (ES)
(86) International application number: PCT/ES2021/000044
(87) International publication number: WO 2022/162250

(57) **Abstract**

The energy and hydrogen transport system uses pipes for its transfer and containers to store it. The ducts have pumps or fans driven by electric motors at their ends, producing suction or pressurization of the duct, which have one or two walls and the containers have two walls. The pressurized hydrogen can be found inside another conduit with a larger section. Between said conduits or between the containers and their casings a noble gas is applied at a higher pressure than the hydrogen in the conduits. Hydrogen is transported in three ways: With a single-walled conduit, hydrogen is transported inside with a pressure below atmospheric. With the two-walled conduit, the intermediate chamber will carry a pressure greater than that of hydrogen and with two or more independent conduits, with the internal floating conduits.

## Description

### FIELD OF THE INVENTION.

In energy transport systems and transfer of hydrogen gas. Hydrogen is used to generate electricity and in oil refineries to remove impurities, such as sulfur and olefins, from crude oil. The removal of these impurities produces less polluting gasoline and diesel, which is the fundamental requirement for modern internal combustion engines, allowing vehicle emissions to be reduced.

STATE OF THE ART. - Hydrogen transport and transfer systems are complicated, expensive, dangerous and/or ineffective. The same happens with the transport of electrical energy. With the present invention such problems can be solved in a simple and economical way.

DESCRIPTION OF THE INVENTION Objective of the invention. Use a useful, practical, economical, simple, safe and leak-free system for the transfer of hydrogen gas.

Transport hydrogen through pipelines over long distances, without losses and economically.

To be able to substitute the transport of electrical energy for that of hydrogen gas using gas pipelines.

Being able to reuse current gas or oil pipelines for the transfer of hydrogen.

Take advantage of renewable energy transformed into green hydrogen, especially that obtained by photoelectrolysis, using transition metal oxides and sulfides. Where some photoelectrochemical cells transform solar radiation into electricity through photoactive anodes and cathodes. These are semiconductors capable of absorbing solar radiation and spontaneously promoting an electric current that circulates from the anode to the cathode, allowing water molecules to break on the anode surface, forming oxygen and protons, which travel through the electrolyte. toward the cathode to form hydrogen.

At the destination, hydrogen can be used to produce electricity with fuel cells, in turbines or internal combustion engines.

Hydrogen can be transported and even stored in double-walled containers or pipes, between which mineral oil, nitrogen or a noble or inert gas is used) pressurized at a higher pressure than the internal hydrogen. In this way it acts as a barrier preventing hydrogen from escaping.

Problem to solve. Hydrogen gas is very difficult to store and transport. Leaks occur due to the small size of the hydrogen molecule and the large differential pressure that exists across the vessel cover. There is no impermeable material that prevents the leakage of hydrogen between its molecules. This problem is solved with this system, being able to transfer it over long distances, like gas, through cheaper gas pipelines, less heavy and without leaks. The transport of electrical energy is expensive and inefficient, it has many losses, with the proposed transfer system the problem can be solved. For all of the above, this system is very ecological, especially if it is green hydrogen that is obtained with renewable energy.

The energy and hydrogen transport system includes pipes for its transfer and storage containers, which is characterized by the fact that the pipes have pumps, fans (fans) at their end or intermediate zone, which are driven by motors, electrical, producing a suction or pressurization of the conduit and because they have one or two walls and because the containers have two or three walls. The pressurized hydrogen can be found inside another conduit with a larger section that surrounds them. Between said conduits or between the containers and their casings or covers, a noble gas or nitrogen is applied at a higher pressure than that of the hydrogen in the conduits or containers. Said noble gas acts as a screen or impermeable preventing the hydrogen from escaping. Optionally, the inner walls of the ducts and even the outer ones can be covered with an additional waterproof layer.

Hydrogen can be transported in three ways:
a) With a single-walled conduit, hydrogen is transported inside with a pressure below atmospheric. It could be similar to or close to atmospheric.
b) With the duct with two walls, or with an intermediate chamber, higher pressures of several atmospheres can be used. In which case the intermediate chamber will carry a fluid (that does not react with hydrogen) with a pressure higher than that of hydrogen.
c) In a variant, two or more independent conduits are used, with the interiors floating, the chamber between them pressurized and the hydrogen flowing through the most internal conduits. This is also valid for containers. In this way the manufacture of the ducts is simpler.

Double or triple wall containers can be used as carboys in vehicles.

When the internal pressure of hydrogen is lower, it does not try or is not forced out of it. The wall does not allow the fluid to enter and mix with the hydrogen, which is at a lower pressure.

The intermediate chamber of the containers and conduits is filled with a mineral oil, nitrogen or a noble gas at a pressure higher than the one at which the hydrogen is to be transferred or stored. The walls can be kept apart by separating strips of thermal insulating material. The fluid used must not react with hydrogen.

You can use an infinite number of gas or oil pipelines that are currently in disuse, or whose current use could be changed. They would be used to transport hydrogen, energy and simultaneously, due to the fact that they are large pipelines or conduits, for storage until later use.

The transport of energy using hydrogen gas pipelines avoids the losses that occur with the current electric energy transport.

With this system there are no leaks, allowing the ducts to be simpler, lighter, safer and more economical, consistent and unaffected by corrosion materials can be used.

The ducts can be covered or lined with layers of insulating polymers that are resistant to corrosion and external atmospheric elements.

The casings of the ducts and containers can be made of special steels or polymers reinforced with carbon and glass fibers, sheets or crossed bands of Kevlar or carbon nanotubes and epoxy with aluminum plates, aluminized, blued, etc. Polyester or polyethylene is resistant to atmospheric agents. Polymers can be spray applied and conduits can be made by extrusion.

Carbon, austenitic, ferritic, etc., steels can be used for vessels and ducts. and steels with copper, brass, chrome and molybdenum alloys, with copper bronze alloys with aluminium, tin, manganese, lead, silica, etc., and with copper bronze alloys with nickel. Microalloyed steels are also useful.

It adds an independent emergency system by means of pressure switches, which, when detecting that there is no depression or pressure, as the case may be, inside the ducts, activate shut-off solenoid valves or pumps or turbines which provide a slight pressure or relative depression inside said ducts.

This system only works in the event of a stoppage of the system that produces the suction, but not in the event of a break in the ducts.

To transport energy, the hydrogen from the receiving tank or container feeds a gas turbine that drives an alternator or generator that distributes the current to towns or industrial zones. From this tank, the hydrogen directly feeds internal combustion engines or fuel cells.

The electrical current to drive pumps, compressors, etc. It can be obtained through renewable energy.

### BRIEF DESCRIPTION OF THE DRAWINGS

Figure 1 shows a schematic and partially sectioned view of a monoshell or monoshell hydrogen conduit of the invention.
Figure 2 shows a schematic, partial and sectional view of duct variants.
Figure 3 shows a schematic and partially sectioned view of a container for storing hydrogen.
Figure 4 shows a schematic and partially sectioned view of two superimposed conduits that facilitate the conduction of hydrogen of the invention.
Figure 5 shows a schematic, partial and sectional view of a variant of use of the ducts.
Figures 6 and 7 show schematized and sectioned views of an outer conduit and several internal hydrogen conduits.
Figure 8 shows a schematic and partially sectioned view of a container for storing hydrogen.
Figure 9 shows a flowchart of a hydrogen transfer system for electric power generation.

### MORE DETAILED DESCRIPTION OF THE INVENTION

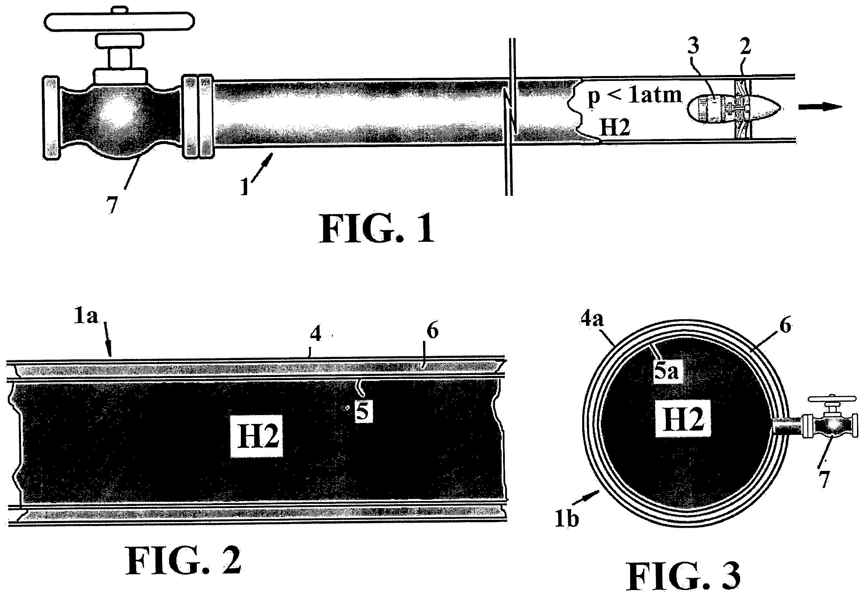

Figure 1 shows an embodiment of the invention, consisting of the conduit (1) inside which hydrogen (H2) circulates at a pressure slightly below atmospheric, which is sucked from the end extraction for use by means of pumps, turbines or fans (2) driven by the electric motor (3), which automatically lowers the pressure in the duct. The stopcock (7) allows the cut off or opening of the passage of hydrogen. In the case of using pressurized ducts, it is also carried out with pumps, fans or fans placed at the other end. In this case, the double-walled conduit should be used, like the one shown in figure 2, creating the most pressurized external chamber that prevents the escape of hydrogen.

Figure 2 shows a double-walled conduit (1a), the external wall (4) and the internal (5), between which carries nitrogen, noble gas or mineral oil (6) at a pressure higher than that of hydrogen, the which circulates through the internal canal.

Figure 3 shows the double-walled container or cylinder (1b), the external wall (4a) and the internal (5a), between which carries nitrogen, noble gas or mineral oil (6) at a pressure higher than that of hydrogen.. The key (7) allows the manual cutting or passage of hydrogen.

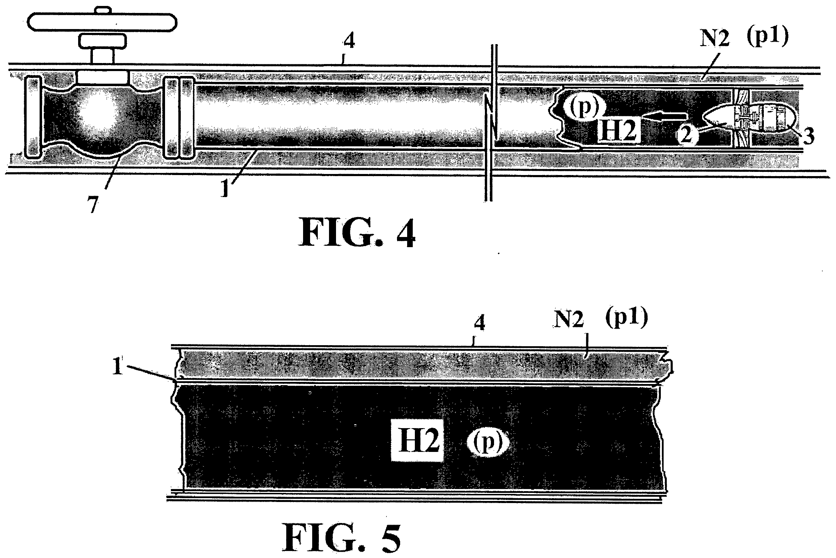

Figure 4 consists of the conduit (1) through which hydrogen (H2) circulates at a pressure (p) several times greater than atmospheric pressure, which is surrounded by the conduit (4). Between the two, a chamber is created to which a noble gas or nitrogen is applied at a pressure (p1) slightly higher than that of the internal hydrogen chamber. The electric motor (3) drives the pump or compressor (2) that drives the hydrogen. The manual stopcock (7) allows the cutoff or opening of the passage of hydrogen that can be replaced by an electrovalve.

Figure 5 shows the conduit (4) inside which carries the conduit (1) with the pressurized hydrogen (p) and between both produce a chamber that carries N2 at pressure (p1). where is p1>p. Using two conduits or casings, in one, the innermost one, carries the pressurized hydrogen and is inside a second conduit or casing with a larger section which surrounds it, between both conduits or casings a noble gas or nitrogen is applied to greater pressure than that of the hydrogen in the conduit or internal chamber, which acts as a screen or insulator preventing the hydrogen from escaping. It is shown as a typical shape in which the internal canal rests internally on the external.

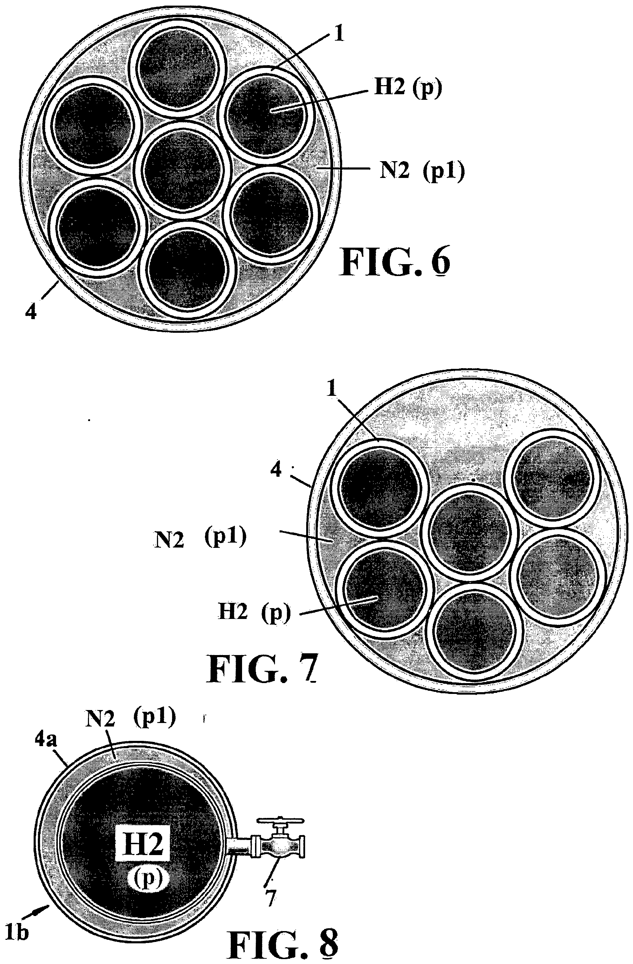

Figure 6 shows the interior ducts (1) carrying hydrogen at pressure (p), which are covered or surrounded by the larger duct (4), which are separated from each other by a noble gas or nitrogen at the pressure (p). intermediate chamber pressure (p1) greater than the pressure of hydrogen. Where p1>p.

Figure 7 shows the interior ducts (1) carrying hydrogen at pressure (p), which are covered or surrounded by the larger duct (4), which are separated from each other by a noble gas or nitrogen at the pressure (p). pressure (p1). Where p1>p. It differs from figure 3 in that the ducts (1) are resting on the lower part of the larger duct (4). In the event that the weight of the ducts is lower, they would be attached to the upper internal zone of the duct.

Figure 8 shows the container or cylinder (1b), with the external cover (4a) and inside which there is another chamber that contains H2 at pressure (p). Between the chamber and the cover, a N2 gas is applied at the pressure (p1), where p1>p, which prevents the escape of hydrogen. The key (7) allows the manual cutting or passage of hydrogen.

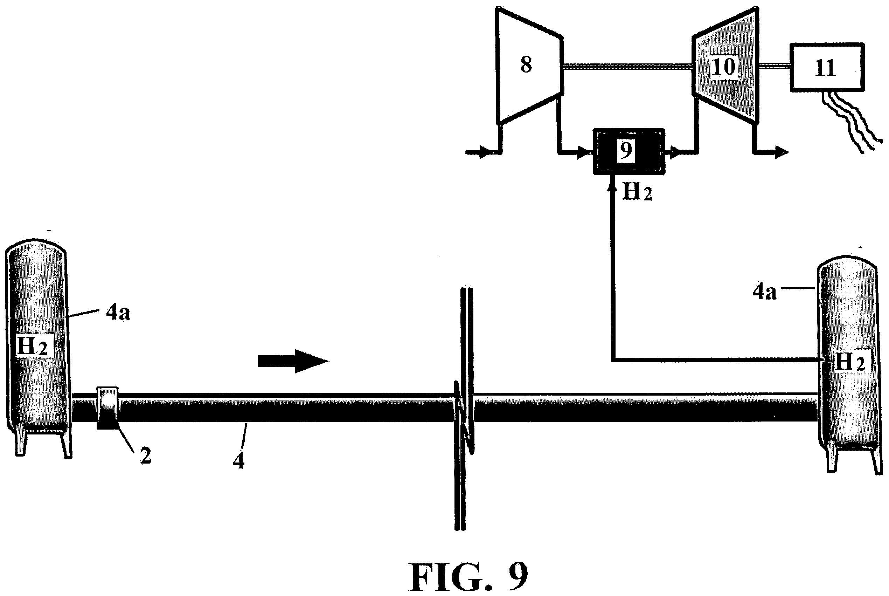

Figure 9 shows the transfer between hydrogen tanks (4a) by means of the pump or compressor (2) and the conduit (4). Subsequently, from the receiving tank, the combustion chamber (9) of the gas turbine is fed. The latter is formed by the compressor (8) that sends the compressed air to the combustion chambers (9) where the combustion of hydrogen is produced by means of a spark, and combustion is subsequently maintained continuously. Applying the expansion of the gases to the turbine (10) whose axis, in addition to moving the compressor (8), drives the alternator (11).

## Claims

1. Energy and hydrogen transport system, which includes pipes for its transfer and containers for its storage, which is **characterized by** the fact that the pipes have pumps, fans or fans at their ends or intermediate zone, which are activated with electric motors, producing a suction or pressurization of the ducts and because the ducts have one or two walls and because the containers have two walls, and adds a security system.

2. The system of claim 1, **characterized in that** in the single-walled ducts the hydrogen is transported inside with a pressure below atmospheric, placing the pumps or fans (fans) at the extraction end.

3. . The system of claim 1, **characterized in that** hydrogen is used at pressures (p) of several atmospheres in the containers or in the double-walled ducts, or with an intermediate chamber, in which case, the intermediate chamber carries a fluid, oil mineral, nitrogen or noble gas at a pressure (p1) higher than that of hydrogen.

4. . The system of claim 1, **characterized by** using floating internal conduits that carry the hydrogen, inside other larger ones and between them the most pressurized chamber

5. . The system of claim 1, **characterized in that** the transport is carried out between storage tanks located at a distance.

6. . The system of claim 5, **characterized in that** the hydrogen from the receiving tank feeds a gas turbine, which drives an electric generator or alternator that distributes current to towns or industrial areas.

7. . The system of claim 1, **characterized in that** the containers covered with casings are used as carboys.

8. . The system of claim 1, **characterized in that** the pipes and containers are covered or lined with anticorrosive insulating layers.

9. . The system of claim 1, **characterized in that** the ducts and containers are selected from among steels or polymers, reinforced with carbon and glass fibers, sheets or crossed bands of Kevlar or carbon nanotubes and epoxy with aluminum plates, aluminized or blued.

10. . The system of claim 1, **characterized in that** the materials for the containers and conduits are selected from carbon, austenitic, ferritic steels and steels with copper, brass, chromium and molybdenum alloys, with copper bronze alloys with aluminium, tin, manganese, lead and silica, and with alloys of copper bronzes with nickel or steels with microalloys.

11. . The system of claim 1, **characterized in that** the security system uses pressure switches, which when detecting that there is no pressure or depression in the ducts, activate shut-off solenoid valves and pumps which produce a slight pressure or depression inside of these ducts.
